# EUROPEAN PATENT SPECIFICATION

(11) **EP 3 736 475 B1**
(45) Date of publication and mention of the grant of the patent: **31.08.2022**
(21) Application number: 19173186.8
(22) Date of filing: 07.05.2019
(51) Int. Cl.: F16K 31/528, E03C 1/04, F16K 31/53, F16K 31/60, F16K 11/078

(54) **FAUCET HANDLE**
ARMATURENGRIFF
POIGNÉE DE ROBINET

(43) Date of publication of application: 11.11.2020
(73) Proprietor: FM Mattsson Mora Group Danmark ApS, 5240 Odense NØ (DK)
(72) Inventor: Rantzau, Claus, 5210 Odense NV (DK)
(74) Representative: Chas. Hude A/S

(56) References cited:
- EP-A1- 2 957 682
- WO-A1-2005/085691
- US-A1- 2010 032 037
- US-A1- 2018 195 258

## Description

### FIELD OF THE INVENTION

The invention relates to handles for mixer faucets using cartridges such as ceramic cartridges, and cartridge-based mixer faucets with such handles.

### BACKGROUND OF THE INVENTION

Mixer faucets are provided for example in relation with sinks, bathtubs and shower heads. Many mixer faucet types exist, such as ball valve faucets, ceramic cartridge faucets and of course traditional dual handle faucets.

Traditional dual handle faucets are small units, but disallow any type of mixing preset. Instead, they require the user to find a good mix by tuning each handle in turn, where any temperature regulation also affects flowrate and vice versa. For this reason, they are not very user friendly. One reason they may still be used is because of their small size and different aesthetics.

Ball and cartridge mixer type faucets are practical in that they allow single operation when regulating water temperature and flowrate. Ceramic cartridges, for example, are provided with a stem that can be rotated to change the temperature of the water, while the tilt of the stem controls the flowrate. This leads to an intuitive water control that users have come to appreciate. Retaining a temperature setting while water flow is turned off, is achieved intuitively by the handle orientation. This allows easy adjustment. By using ceramic cartridges, designers can focus on aesthetics and other design aspects while knowing the resultant product will be of high quality. However, even ball and cartridge mixer type faucets can be difficult to precisely control for some users, as they rely on user dexterity to perform straight movements to obtain combined temperature and flow regulation. Furthermore, the pre-setting of the mixing rate of a turned off ball or cartridge faucet is easily fouled by walking into the faucet or cleaning it or other such everyday occurrence.

Therefore, there is a need for a mixer faucet handle that can precisely control temperature and flow while being small.

Documents US2018/195258 A1 and EP2957682 A1 disclose known examples of mixer faucet handles.

### SUMMARY OF THE INVENTION

It is the aim of the current invention to alleviate at least some of the above-mentioned problems. This is achieved by a mixer faucet handle for a mixer faucet with a cartridge having a stem, the mixer faucet handle adapted to convert user handling into controlling rotation and tilt of said mixer cartridge stem to control temperature and flowrate respectively of water poured from said mixer faucet, the mixer faucet handle comprising: a knob with an outer surface for receiving rotational user handling, a rotating mechanism converting rotation of a section of said knob outer surface into rotation of said stem, and a tilting mechanism being a different mechanism from the rotating mechanism, said tilting mechanism converting rotation of said section of said knob outer surface into tilting said stem.

Thereby, a mixer faucet handle is achieved that allows precise control of temperature and flowrate by individually controlling temperature and individually controlling flowrate. Since this is achieved through rotation of the handle and no tilting is necessary, a long handle is not needed to achieve the improved control. This allows the handle to be very small compared to mixer faucet handles of the art. By a mixer faucet is meant any type of faucet adapted to mix two sources of water, such as is the case with a sink faucet and a bathroom faucet, the latter used with bathtubs, showers, etc. In an embodiment, the mixer faucet is a sink mixer faucet. In an embodiment, the mixer faucet is a shower mixer faucet.

In an embodiment, the mixer faucet handle further comprises a shifter for switching between a first gear and a second gear of the mixer faucet handle.

When the mixer faucet handle is in said first gear, the rotating mechanism is engaged to the knob and the tilting mechanism is disengaged from said knob. When the mixer faucet handle is in said second gear, the tilting mechanism is engaged to the knob and said rotating mechanism is disengaged from said knob. The shifter switches between the first and second gears by disengaging one mechanism and engaging the other mechanism.

The switching mechanism can work in a variety of ways. It can be a simple change between the gears by moving the knob up or down depending on which gear a user wishes to activate. It can be a ball-pen type shifter where pushing down on the knob changes the gears from the first to the second as well as from the second to the first gear. Furthermore, it can be at rest in one gear where, when changed out of the rest gear to change temperature / mixing ratio, a spring means then returns the handle to the at-rest gear when released.

The terms gear and state are used interchangeably in the present disclosure to describe the arrangement of the parts of the mixer faucet handle, where a first gear /first state relates to a situation when the rotating mechanism is coupled to the knob, while the second gear / state relates to a situation when the tilting mechanism is coupled to the knob.

In an embodiment, the mixer faucet handle further comprises a modified stem for rigidly engaging to the stem of said cartridge, the stem adapter interfacing with said rotating mechanism and said tilting mechanism.

Thereby, the mechanisms can be designed to more precisely interact with the stem through interfaces like a ball guide, which is especially useful for the tilting mechanism.

In an embodiment, the mixer faucet handle further comprises a stem adapter for rigidly engaging to the stem of said cartridge, the stem adapter interfacing with said rotating mechanism and said tilting mechanism.

Thereby, the mechanisms can be designed to more precisely interact with the stem through interfaces designed specifically for the desired implementation of the tilting mechanism, such as a ball guide. Furthermore, it is easy to install the mixer faucet handle onto existing standard cartridges.

The tilting mechanism converts rotation of the knob to what is essentially rotation of the stem around a hinge inside the cartridge, where the rotation of the stem around this hinge controls the flowrate of water. In effect, the tilt-movement of the stem thus becomes a bow-shaped motion that seems linear when seen from above an installed mixer faucet handle. This movement is termed the tilt / tilting motion. The tilting mechanism then has to ideally translate the rotation to this bow-shaped tilt, and at least to translation.

Several types of mechanisms can accomplish this. Examples are jointed mechanisms, guide mechanisms, cam-follower-types mechanisms and compliant mechanisms.

In an embodiment, a rigid jointed mechanism like a slider-crank type mechanism is used. Such a mechanism has an annular cogwheel connected to an inner pinion meshing with the annular cogwheel. The pinion then forms the crank and is connected to the stem, which forms the slider-part of the slider-crank mechanism.

Thereby, a mechanism is supplied that achieves the conversion of the knob rotation needed.

In an embodiment, an inverted cam-follower mechanism is used, where a link moves along the inside surface of a cut-out in a disc fastened relative to the knob. The periphery dimensions of the cut-out then determines the gearing of the resulting tilting mechanism. By using an inverted cam-follower type mechanism, a mechanism is supplied that achieves the conversion of the knob rotation needed and furthermore allows free gearing control of the tilting mechanism during handle design. Using an inverted cam-follower, a retaining spring means is further used to ensure compliance to the periphery of the cut-out.

In an embodiment, the tilting mechanism comprises a guide for converting rotation of said knob to a tilting of said stem. The guide can be a linear guide or a snail guide, with a recess or hole. In an embodiment, the tilting mechanism comprises a snail guide for converting rotation of said knob to tilt said stem. By a snail guide is meant a spiral-shaped guide being a cut-out or groove inset in a material, the snail guide adapted to interact rigidly with a ball guide or similar protrusion.

Whether the guide is a snail guide or taking another shape such as a linear groove, when the guide is rotated and its interacting ball-guided object cannot rotate, the ball is forced to move through the guide, which translates the rotation of the guide to a translation / linear movement of the guided part, i.e. the stem or stem adapter. Where this guided part is a stem adapter or a stem, this then tilts the stem.

Thereby, a compact mechanism is achieved whose force translation ratio, that is, the gearing, can be controlled precisely by modifying the angle of the spiral. Furthermore, this allows few moving parts and may increase durability of the mixer faucet handle. Even further, when used in combination with a stem adapter, materials can be selected to ensure that wear appears on parts being easiest to replace, such as the stem adapter.

By using either the cam-follower or the guide, the gearing can be controlled during handle design. This is very useful because standard ceramic cartridges, by virtue of their design, have aggressive flow-adjustment curves: when the cartridge stem is tilted halfway from closed to open, about ninety percent of the water flow is allowed to pass through the cartridge. This means that the first half of the stem tilt is responsible for most of the flow control.

By providing the option of custom gearing, cam-followers and snail guides allow distributing the gearing more linearly along the rotation of the handle knob. This is then done by ensuring that the first portion of the tilting from vertical / closed has a lower gearing than later in the movement.

When using flow constrictors and/or water aerators for the water, these can further be taken into account in the gearing of the cam follower or snail guide to allow precise and linear gearing throughout the range of water flowrates that can be output from the faucet.

Snail guides has the further advantage that it has two opposed guiding surfaces that may conform to a three dimensional shape to ensure deterministic control of the mechanism. The two opposing surfaces further ensure better movement, quicker response to user handling and better retaining of a stem adapter part in the guide.

By using a snail guide, the gearing is especially smooth and easy to design.

In an embodiment where the tilting mechanism comprises a snail guide and the faucet handle comprises a stem adapter, the stem adapter comprises a ball guide interfacing with the snail guide.

Thereby, precise control and efficient force transfer are achieved.

In an embodiment, switching between said first and second gears comprise a movement of at least a portion of the knob along the height axis of a cartridge controlled by the mixer faucet handle. Thereby, it is easy for the user to switch gears between flow control and temperature control.

In an embodiment, switching between said first and second gears comprises moving the knob along the height axis of a cartridge controlled by the mixer faucet handle. Thereby, the mixer faucet handle is further user friendly by the current gear being visible at a glance, and it is mechanically convenient for faucet handle designers to separate and make the tilting and rotating mechanisms.

In an embodiment, the shifter comprises a peripheral spring means to alternate between snap-fitting into a first and a second groove of the knob. When the shifter is in the first groove, this puts the mixer faucet handle in the first gear, while when the shifter is in the second groove, the mixer faucet handle is in the second gear.

Thereby, efficient space utilisation is achieved while also ensuring a simple construction.

In an embodiment, switching between said first and second gears by disengaging one mechanism and engaging another mechanism is achieved by rotationally locking and disengaging parts relative to each other by meshing and unmeshing peripheral cogwheels and annular cogwheels.

Two parts that are rotationally locked have the same degree of rotational freedom around an axis being co-axial with the rotation of the knob. The rotational lock between parts determines how and where in the mechanism the forces are translated.

By peripheral cogwheels are meant cogwheels with outwards-facing teeth, while with annular cogwheels are meant cogwheels with inwards-facing teeth.

By using annular and annular cogwheels several advantages are obtained. First, a secure attachment is achieved. Second, cogwheels take up only little space on the mixer faucet handle. Thirdly, no matter how the parts are rotated relative to each other while being disengaged, when a user changes the gear, the cogwheel teeth easily mesh between each other. Thereby, the mixer faucet handle does not get stuck between gears, or require precise orientation to successfully change gears. The slack that invariably exists in mechanical devices helps ensure that the teeth will mesh more easily. In an embodiment hereof, cogwheel teeth have rounded or bevelled end faces. Thereby, easy and imperceptible cogwheel meshing is ensured.

In an embodiment, the mixer faucet handle further comprises a locking nut for fastening said mixer faucet handle relative to said faucet and a transmission ring being rotationally locked relative to the stem. In this embodiment, when the faucet handle is in the first gear, the transmission ring is rotationally locked relative to the knob and rotatable relative to said locking nut. When the faucet handle is in the second gear, the transmission ring is rotationally locked relative to the locking nut and stem and rotatable relative to said knob.

Thereby, a practical dual purpose part in the shape of the transmission ring is used that is part of both the rotational mechanism and the tilting mechanism, ensuring a compact design.

In an embodiment of a mixer faucet handle having a transmission ring, the transmission ring and locking nut have similar cogwheels. The transmission ring and locking nut can be rotationally locked by meshing both of said similar cogwheels using a coordinating cogwheel. Thereby, a compact design is used.

In an aspect of the invention, it relates to a mixer faucet with a mixer faucet handle according to the invention.

In an embodiment of the invention relating to a mixer faucet with a mixer faucet handle, the mixer faucet is a sensor-enabled mixer faucet with a sensor and a sensor-controlled water flow control valve. Thereby, compared to sensor-enabled mixer faucets of the art, a more controllable mixer faucet is achieved that is adapted to allow granular flow-rate control while being compact.

### SHORT LIST OF THE DRAWINGS

In the following, example embodiments are described according to the invention, where:
Figs. 1A-B are conceptual cross sections of the faucet handle according to the invention,
Figs. 2A-B are side views of a faucet having a faucet handle according to the invention,
Fig. 3 is an exploded view of an embodiment of the invention,
Fig. 4 is a partially exploded view of an embodiment of the invention,
Fig. 5 is a cross-sectional side-view of part of a rotary mechanism according to the invention,
Figs. 6A-C are top views of part of a rotary mechanism according to the invention,
Fig. 7 is a cross-sectional side-view of part of a tilting mechanism according to the invention, and
Figs. 8A-C are top views of part of a tilting mechanism according to the invention.

### DETAILED DESCRIPTION OF DRAWINGS

In the following the invention is described in detail through embodiments hereof that should not be thought of as limiting to the scope of the invention.

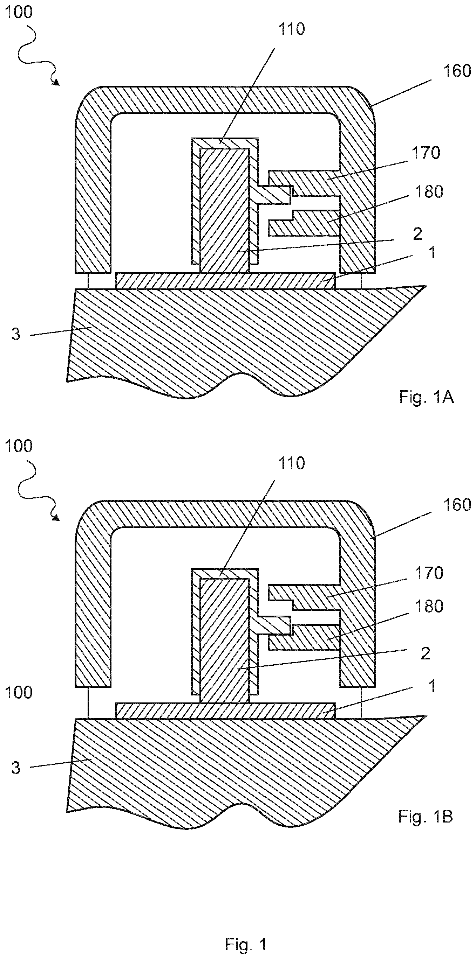

Figs. 1A-B are conceptual cross sections of the faucet handle 100 according to the invention. Fig. 1A illustrates the faucet handle 100 in a first position. The faucet handle 100 has a stem adapter 110 affixed to a stem 2 of a cartridge 1. It can be glued or screwed to it or fitted with a frictional fit. The faucet handle has two gears, where the first gear is facilitated by a rotating mechanism 170 and the second gear is facilitated by a tilting mechanism 180. The faucet handle 100 is in the first gear when it is in a first position, the rotating mechanism 170 engages with the stem adapter 110 to translate rotation from the knob 160 to the stem 2, while the tilting mechanism 180 is disengaged from the stem adapter 110. In the first gear, the stem 2 is thus rotated when the knob is rotated. The engagement means may take various shapes that affixes the stem adapter relative to the rotating mechanism 170.

By rotating the knob 160 while the faucet handle 100 is in the first position, a user controls the mixing ratio of the attached cartridge 1 and any water output from the faucet 3.

Fig. 1B illustrates the faucet handle 100 in a second gear. As can be seen, the knob part 160 and the mechanisms 170, 180 are lifted relative to the stem 2 and stem adapter 110. When these parts are lifted to the second position, the faucet handle is in the second gear, where the rotating mechanism 170 is disengaged from the stem adapter 110, and the stem adapter is instead brought into mechanical communication with the tilting mechanism 180. The tilting mechanism converts rotation to translation/tilting of the stem 2 by manipulating the stem adapter 110.

By rotating the knob 160 while the faucet handle 100 is in the second gear, a user controls the water flow through the cartridge 1 and ultimately from the faucet 3 without affecting the mixing ratio.

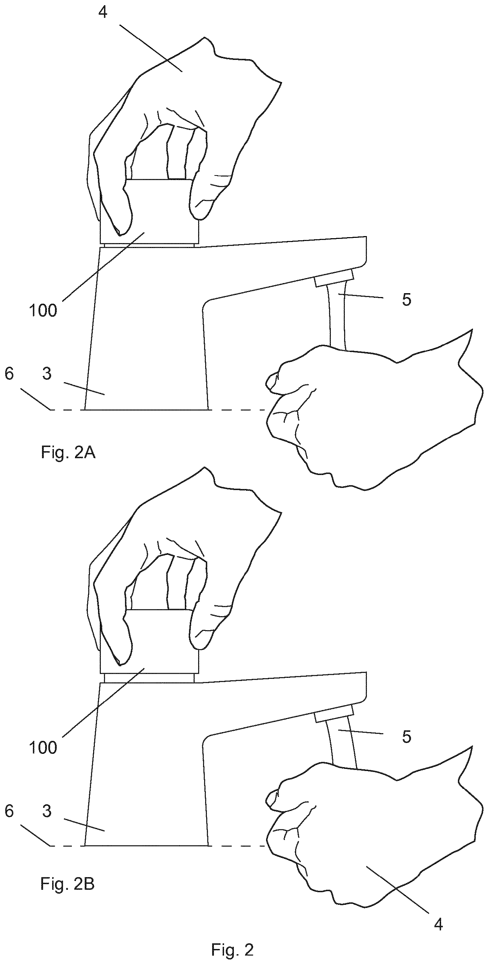

Figs. 2A-B are side views of a faucet 3 having a faucet handle 100 according to the invention. The faucet 3 is provided on a table top 6.

Fig. 2A illustrates a user 4 turning the knob 160 of the faucet handle 100 while the faucet handle is in the first gear. Thereby, the user 4 controls the temperature of water 5 output from the faucet 3. This can of course be performed in combination with any degrees of water flow. In the depicted situation, a user has previously turned the water on slightly to evaluate the temperature setting. Controlling the temperature alone without affecting the water flow may be more precise, at least for users with reduced dexterity.

Fig. 2B illustrates a user 4 turning the knob 160 of the faucet handle 100 in the second gear. The reader will note the slightly lifted knob of the faucet handle 100. This controls the flow of water 5 output from the faucet 3.

Once a user has achieved a desirable temperature using the first gear, the user may lift the knob 160 part to change to the second gear to adjust water flow. The desirable temperature is maintained through use cycles, and a user may thus easily retain a practical temperature between uses. In any regard, the user 4 may rotate the knob 160 while in the second gear to control the flow of water 5 from the faucet 3. As with water temperature, it may be practical for some users to control the water flow alone without affecting water temperature. Also, a rotational movement may be easier to control than a lifting motion normally associated with water flow control.

Thereby, a user friendly faucet handle 100 is achieved that may be easier to control for some users as well as having a smaller size. The smaller size allows designers more aesthetic freedom during faucet design. For example, a faucet handle can be small as depicted or can have small protrusions for ease of manipulation, or can even have shapes specifically adapted to be easy to rotate.

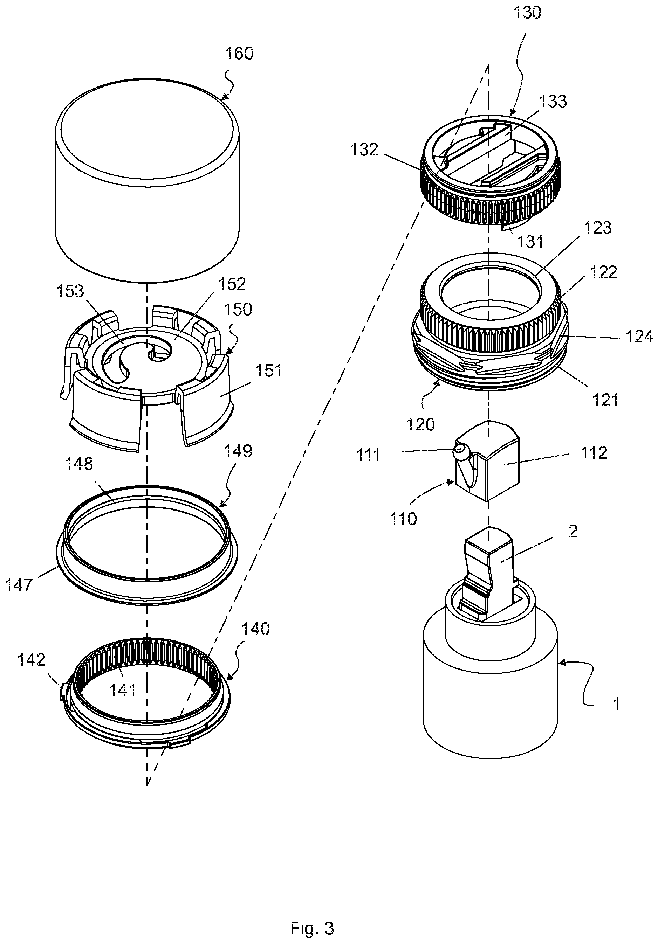

Fig. 3 is an exploded view of a preferable faucet handle 100 according to the invention, shown with a cartridge 1. In this embodiment, the tilting and rotating mechanisms utilise some of the same parts to improve space utilisation, as will be discussed in the following. This ultimately reduces the size of the faucet handle while retaining aspects such as parts lifetime, user control and adjustment fidelity.

The cartridge 1 is a standard ceramic cartridge 1 normally used with faucets of the art, having a stem 2. The type of cartridge used is of the type where rotating the stem 2 changes the mixing ratio of two liquid inputs in the cartridge 3, while tilting the stem 2 opens and closes the passageway through the ceramic cartridge 3, thereby controlling water flow.

A stem adapter 110 is fitted onto the stem to ease force translations in the tilting mechanism. This is done by the stem adapter having a ball guide 111. The stem adapter 110 further has a surface guide 112 being simply a surface that can be leveraged against to rotate the stem 1. The surface guide 112 can be any part of the stem adapter 110 that can receive rotational force.

A locking nut 120 is fastened to the cartridge such as affixed to a modified cartridge shell, as well as having a fastening thread 121 that is affixed relative to the faucet by threaded engagement. The locking nut can be fastened using the nut section 124. The locking nut 120 has a locking cogwheel 122 located around the periphery of the locking nut 120 provided immovably relative to the cartridge 1 and faucet 3. The locking nut 120 further has an annular lip 123 that extends radially inwards at the top of the locking nut 120.

A transmission ring 130 engages with the locking nut by snap-fitting a tongue 131 under the annular lip 123. The snap-fit allows the transmission ring 130 free rotation relative to the locking nut 120. The transmission ring 130 further has a transmission cogwheel 132 being a peripheral cogwheel, and a rotary guide 133 being simply a surface abutting the surface guide 112. The transmission cogwheel 132 has a tooth pattern and diameter being similar to or even identical to the locking cogwheel 122. When assembled, the rotary guide 133 abuts the surface guide 112, rotationally locking the stem adapter relative to the transmission ring 130.

A coordinating ring 140 has a coordinating cogwheel 141 adapted to mesh with the locking cogwheel 122 and the transmission cogwheel 133. A running lip 142 is adapted to fit in a corresponding running recess 148 of a wear ring 149. The coordinating ring 140 rotates freely relative to the wear ring 149. The wear ring 149 flange 147 snaps into a running groove in a knob 160 (not shown).

The coordinating cogwheel 141 is moved laterally up and down during gear change. In the first gear, the coordinating cogwheel 141 meshes only with the locking cogwheel 122. This allows the transmission ring 130 to rotate freely relative to the locking nut 120. In the second gear, the coordinating cogwheel 141 meshes with both the locking cogwheel 122 and the transmission cogwheel 132, thereby coordinating the two cogwheels. This prevents the stem adapter 110, and hence the stem 2, from rotating relative to the cartridge 1.

A shifter 150 has spring elements 151 adapted to alternatingly snap-fit into a first and a second groove in the knob 160 (not shown). The shifter 150 has a snail guide 153. When assembled, the snail guide 153 interfaces with the ball guide 111 of the stem adapter 110. When the faucet handle 100 is in the second gear, the power transfer from knob 160 rotation is translated through the snail guide 153 to the ball guide 111, thus tilting the cartridge stem 2. By using a snail guide 153, a rotation is converted to translation with a torque according to the specific design. In other words, though the depicted snail guide is approximately two-hundred-seventy degrees, the snail guide could be other lengths as well.

To further improve the usefulness of the force translation, the snail guide 152 is provided in a guide dome 152 whose roof follows the gradual lowering of the ball guide 111 as the tilt is increased. This ensures that the mechanism is kept constrained, specifically that the ball guide 111 is retained in the snail guide 152 throughout its travel.

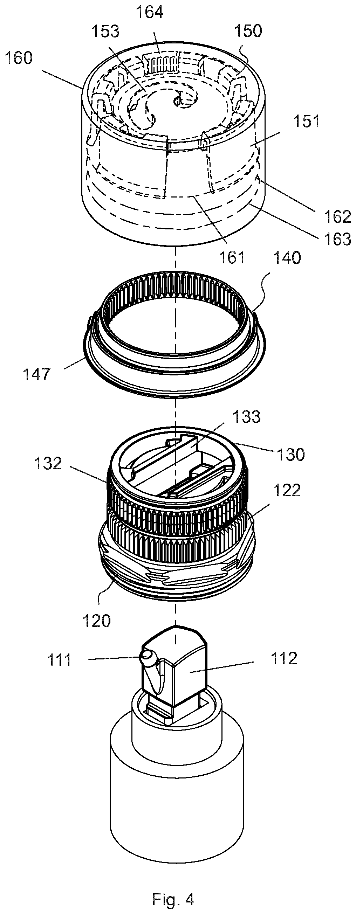

Fig. 4 is a partially exploded view of the faucet handle 100 of Fig. 3. The knob 160 has a knob cogwheel 164 being an inner, annular set of teeth adapted to mesh with the transmission cogwheel 132 while the faucet handle is in the first gear. The knob cogwheel 164 also blocks the shifter 150 rotation. In a preferable embodiment, knob cogwheels 164 are provided at further spaces between shifter 150 spring elements 151.

The knob has a first groove 161, a second groove 162 and a running groove 163. The running recess 163 is for engagement with a coordinating ring.

The first groove 161 and the second groove 162 provide frictional engagement with spring elements 151 to retain the shifter in either groove.

Changing gears moves the shifter 150, whose spring elements 151 snap-fits into the first groove 161 and the second groove 162.

A user who changes the gear of the faucet handle 100 from the first gear to the second fear, for example, does so by grabbing onto the knob 160 and lifting it. The knob 160 then snaps into place to activate the second gear. This is achieved by the snap-fit of the shifter 150 spring elements 151 moving from the first groove 161 to the second groove 162.

When the gear is shifted from the first gear to the second gear, the knob 160, including its knob cogwheel 164 and the coordinating ring 140 with its cogwheel 141 are moved laterally up relative to the lock nut 120, the transmission ring 130, and the shifter 150. This disengages the rotational lock between the transmission ring 130 and the knob 160, and instead rotationally locks the transmission ring 130 relative to the lock nut 120.

When the gear is shifted from the second gear to the first gear, the knob 160 including its knob cogwheel 164 and the coordinating ring 140 with its cogwheel 141 are moved laterally down relative to the lock nut 120, transmission ring 130, and shifter 150. This rotationally locks the transmission ring 130 to the knob 160 while disengages the rotational lock between the transmission ring 130 and the lock nut 120.

In other words, the first and second grooves 161, 162 stably provide first and second positions, to activate the first and second gears respectively. When a user lifts or pushes down on the faucet handle 100, they shift between these two possible shifter 150 engagements. When the shifter rest 150 in the first groove 161, the faucet handle 100 is in a first state/gear and when the shifter 150 rests in the second groove 162, the faucet handle 100 is in a second state/gear.

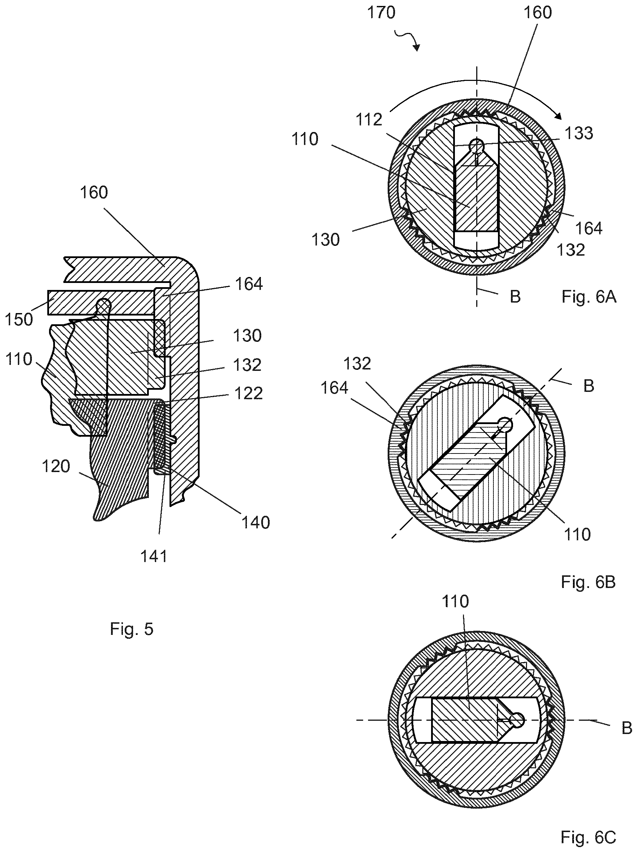

Fig. 5 is a cross-sectional side-view of part of a rotary mechanism according to the invention. The depicted faucet handle 100 is in the first gear.

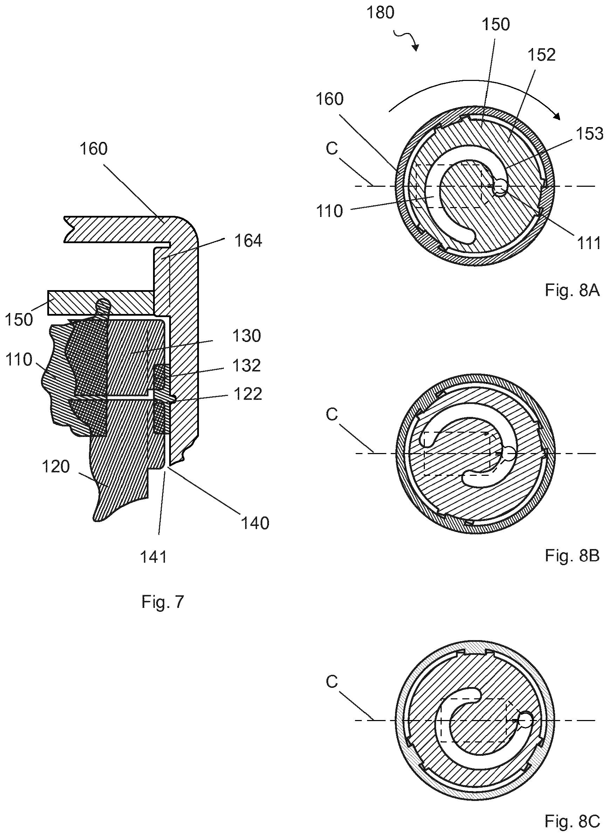

Hatching is used in Figs. 5 and 7 to denote with identical pattern density which parts are rotationally locked. The locking nut 120 and the coordinating ring 140 are rotationally locked. This is accomplished by the locking cogwheel 122 meshing with the free-running coordinating cogwheel 141.

The shifter 150 is rotationally locked relative to the knob 160. The stem adapter 110 is rotationally locked to the transmission ring 130.

In the depicted first state/gear, when the knob 160 is rotated clockwise, the knob cogwheel 164, meshes with the transmission cogwheel 132 to drive transmission ring 130 rotation. This rotates the stem adapter 110. Thereby, when a user rotates the knob 160, the knob cogwheel 164 forces the transmission ring 130 to rotate, rotating the stem adapter 110.

Fig. 6 illustrates the rotating mechanism 170 that drives stem movement in the first gear/state of the faucet handle 100. In Fig. 6A, we see how this force translates to the stem of the cartridge. Since the transmission ring 130 is affixed to the knob, the transmission ring 130 rotates the stem adapter through the interfacing rotary guide 133 and surface guide 112. The resultant stem adapter rotation can be seen in Fig. 6B and 6C, by the rotation of the stem adapter 110 and its rotary axis B. Although not shown in Fig. 6, the reader will realise when looking again at Fig. 4-5, that the shifter 150 rotates with the stem adapter 110. The significance of this is that the rotational position of the ball guide in the spiral guide is maintained even after the faucet handle is used to change stem rotation.

In summary, the only part that interfaces with the stem adapter 110 while not being rotationally locked with the stem adapter 110 is the locking nut 120. Therefore, any rotation applied to the handle will rotate the stem adapter 110 relative to the locking nut 120.

Fig. 7 is a cross-sectional side-view of part of a tilting mechanism according to the invention. In it, as in Fig. 5, hatching with identical weight is used for parts that are rotationally locked. The knob 160 and shifter 150 are rotationally locked. Since the coordinating cogwheel 141 now meshes with both the transmission cogwheel 132 and the locking cogwheel 122, the transmission cogwheel is rotationally locked to the locking cogwheel 122 and thus the locking nut 120. This in turn locks rotation of the stem adapter 110 and the stem. As can be seen, the part that interfaces with the stem adapter 110, while not being rotationally locked with it, is the shifter 150. In other words, this is where the rotational force is exchanged.

Looking now on Fig. 8A-C, we see the tilting mechanism 180. As the knob 160 is rotated clockwise, the shifter 150, being rotationally locked relative to the knob 160, follows. Since the stem adapter 110 is rotationally locked to the faucet (not shown), the stem adapter 110 cannot follow this rotation. Instead, the snail guide 153 translates the ball guide 111 and the stem adapter 110 along a tilt axis C.

## Claims

1. A mixer faucet handle (100) for a mixer faucet (3) with a cartridge (1), said cartridge having a mixer cartridge stem (2), the mixer faucet handle (100) adapted to convert user handling into controlling rotation and tilt of said mixer cartridge stem (2) to control temperature and flowrate respectively of water poured from said mixer faucet (3), the mixer faucet handle (100) comprising:
- a knob (160) with an outer surface for receiving rotational user handling,
- a rotating mechanism (170) converting rotation of a section of said knob (160) outer surface into rotation of said mixer cartridge stem (2), and
- a tilting mechanism (180) being a different mechanism from the rotating mechanism (170), said tilting mechanism (180) converting rotation of said section of said knob (160) outer surface into tilting said mixer cartridge stem (2) **characterized in that** the mixer faucet handle (100) further comprises a shifter (150) for switching between a first gear and a second gear of the mixer faucet handle (100), where:
- when the mixer faucet handle (100) is in said first gear, the rotating mechanism is engaged to the knob (160) and the tilting mechanism (180) is disengaged from said knob (160), and
- when the mixer faucet handle (100) is in said second gear, the tilting mechanism is engaged to the knob (160) and said rotating mechanism is disengaged from said knob (160),
- wherein said shifter (150) switches between said first and second gears by disengaging one mechanism and engaging another mechanism.

2. A mixer faucet handle (100) according to claim 1, wherein said section of said knob (160) is the knob (160) itself.

3. A mixer faucet handle (100) according to any of claims 1-2 further comprising a stem adapter (110) for rigidly engaging to the mixer cartridge stem (2) of said cartridge (1), the stem adapter (110) engages at least with said tilting mechanism (180).

4. A mixer faucet handle (100) according to any of claims 1-3, wherein said tilting mechanism (180) comprises a guide (153) for converting rotation of said knob (160) to tilt said mixer cartridge stem (2).

5. A mixer faucet handle (100) according to claim 4, wherein said guide (153) is a snail guide.

6. A mixer faucet handle (100) according to any of claims 1-5, wherein switching between said first and second gears comprises a movement of at least a portion of the knob (160) along the height axis of a cartridge controlled by the mixer faucet handle (100).

7. A mixer faucet handle (100) according to any of claims 1-6, wherein said shifter comprises a peripheral spring means to alternating between snap-fitting into a first and a second groove (161, 162) of the knob (160).

8. A mixer faucet handle (100) according to any of claims 1-7, wherein rotationally locking and disengaging parts relative to each other when shifting between said first and second gear is performed by meshing and unmeshing of peripheral cogwheels (122, 132) and annular cogwheels (141, 164).

9. A mixer faucet handle (100) according to any of claims 1-8, further comprising a locking nut (120) for fastening said mixer faucet handle (100) relative to said faucet (1), the mixer faucet handle (100) further comprising a transmission ring (130) being rotationally locked relative to said mixer cartridge stem (2), where:
- when said faucet handle (100) is in said first gear, the transmission ring (130) is rotationally locked relative to said knob (160) and rotatable relative to said locking nut (120), and
- when said faucet handle (100) is in said second gear, the transmission ring (130) is rotationally locked relative to said locking nut (120) and stem (2) and rotatable relative to said knob (160).

10. A mixer faucet handle (100) according to claims 1 and 9, wherein said transmission ring (130) and locking nut (120) have similar cogwheels (122, 132), and where said transmission ring (130) and locking nut (120) can be rotationally locked by meshing both of said similar cogwheels (122, 132) with a coordinating cogwheel (141).

11. A mixer faucet (3) with a mixer faucet handle (100) according to any of claims 1-10.

12. A sensor-enabled mixer faucet (3) with a mixer faucet handle (100) according to any of claims 1-10.

## Patentansprüche

1. Ein Mischbatteriegriff (100) für eine Mischbatterie (3) mit einer Kartusche (1), wobei jene Kartusche einen Mischkartuschenschaft (2) aufweist, wobei der Mischbatteriegriff (100) geeignet ist, um die Bedienung durch den Benutzer in die Steuerung der Drehung und Neigung jenes Mischkartuschenschafts (2) umzuwandeln, um die Temperatur bzw. die Durchflussmenge des aus jener Mischbatterie (3) ausgegossenen Wassers zu steuern, wobei der Mischbatteriegriff (100) umfasst:
- einen Knopf (160) mit einer Außenfläche zur Aufnahme einer drehenden Benutzerbedienung,
- einen Drehmechanismus (170), der die Drehung eines Abschnitts der Außenfläche jenes Knopfes (160) in eine Drehung jenes Mischkartuschenschafts (2) umwandelt, und
- einen Kippmechanismus (180), der ein anderer Mechanismus als der Drehmechanismus (170) ist, wobei jener Kippmechanismus (180) die Drehung jenes Abschnittes der Außenfläche jenes Knopfes (160) in ein Kippen des Mischkartuschenschafts (2) umwandelt,
**dadurch gekennzeichnet, dass** der Mischbatteriegriff (100) ferner einen Schalthebel (150) zum Umschalten zwischen einem ersten Gang und einem zweiten Gang des Mischbatteriegriffs (100) umfasst, wobei:
- wenn sich der Mischbatteriegriff (100) in jenem ersten Gang befindet, der Drehmechanismus mit dem Knopf (160) gekoppelt ist und der Kippmechanismus (180) von jenem Knopf (160) entkoppelt ist, und
- wenn sich der Mischbatteriegriff (100) in jenem zweiten Gang befindet, der Kippmechanismus mit dem Knopf (160) gekoppelt ist und jener Drehmechanismus von jenem Knopf (160) entkoppelt ist,
- wobei jener Schalthebel (150) zwischen jenem ersten und jenem zweiten Gang umschaltet, indem er einen Mechanismus entkoppelt und einen anderen Mechanismus koppelt.

2. Ein Mischbatteriegriff (100) nach Anspruch 1, wobei jener Abschnitt jenes Knopfs (160) der Knopf (160) selbst ist.

3. Ein Mischbatteriegriff (100) nach einem der Ansprüche 1 bis 2, ferner umfassend einen Schaftadapter (110) zum starren Koppeln mit dem Mischkartuschenschaft (2) jener Kartusche (1), wobei der Schaftadapter (110) zumindest mit jenem Kippmechanismus (180) koppelt.

4. Ein Mischbatteriegriff (100) nach einem der Ansprüche 1 bis 3, wobei jener Kippmechanismus (180) eine Führung (153) zur Umwandlung der Drehung jenes Knopfes (160) umfasst, um jenen Schaft (2) der Mischkartusche zu kippen.

5. Ein Mischbatteriegriff (100) nach Anspruch 4, wobei jene Führung (153) eine Schneckenführung ist.

6. Ein Mischbatteriegriff (100) nach einem der Ansprüche 1-5, wobei das Umschalten zwischen jenem ersten und zweiten Gang eine Bewegung von mindestens einem Teil des Knopfes (160) entlang der Höhenachse einer Kartusche umfasst, die durch den Mischbatteriegriff (100) gesteuert wird.

7. Ein Mischbatteriegriff (100) nach einem der Ansprüche 1-6, wobei jener Umschalter ein peripheres Federmittel umfasst, um alternierend in einer ersten und einer zweiten Nut (161, 162) des Knopfes (160) einzurasten.

8. Ein Mischbatteriegriff (100) nach einem der Ansprüche 1-7, wobei das drehbare Verriegeln und Entriegeln der Teile relativ zueinander beim Umschalten zwischen jenem ersten und zweiten Gang durch Ineinandergreifen und Außeinandergreifen von Umfangszahnrädern (122, 132) und ringförmigen Zahnrädern (141, 164) erfolgt.

9. Ein Mischbatteriegriff (100) nach einem der Ansprüche 1-8, ferner umfassend eine Verriegelungsmutter (120) zum Befestigen jenes Mischbatteriegriffs (100) relativ zu jener Armatur (1), wobei der Mischbatteriegriff (100) ferner einen Übertragungsring (130) umfasst, der relativ zu jenem Mischkartuschenschaft (2) drehbar verriegelt ist, wobei:
- wenn sich der Armaturengriff (100) in jenem ersten Gang befindet, der Übertragungsring (130) relativ zu jenem Knopf (160) drehbar verriegelt ist und relativ zu jener Verriegelungsmutter (120) drehbar ist, und
- wenn sich jener Armaturengriff (100) in jenem zweiten Gang befindet, der Übertragungsring (130) relativ zu jener Verriegelungsmutter (120) und jenem Schaft (2) drehbar verriegelt ist und relativ zu jenem Knopf (160) drehbar ist.

10. Ein Mischbatteriegriff (100) nach den Ansprüchen 1 und 9, wobei jener Übertragungsring (130) und die Verriegelungsmutter (120) gleichartige Zahnräder (122, 132) aufweisen, und wobei jener Übertragungsring (130) und die Verriegelungsmutter (120) drehbar verriegelt werden können, indem die beiden gleichartigen Zahnräder (122, 132) mit einem koordinierenden Zahnrad (141) ineinandergreifen.

11. Eine Mischbatterie (3) mit einem Mischbatteriegriff (100) nach einem der Ansprüche 1-10.

12. Eine sensorgesteuerte Mischbatterie (3) mit einem Mischbatteriegriff (100) nach einem der Ansprüche 1-10.

## Revendications

1. Poignée de robinet mélangeur (100) pour un robinet mélangeur (3) avec une cartouche (1), ladite cartouche ayant une tige (2) de cartouche mélangeur, la poignée de robinet mélangeur (100) étant adaptée pour convertir la manipulation de l'utilisateur en commande de rotation et d'inclinaison de ladite tige de cartouche mélangeur ( 2) pour contrôler la température et le débit respectivement de l'eau versée depuis ledit robinet mélangeur (3), la poignée de robinet mélangeur (100) comprenant :
- un bouton (160) avec une surface externe pour recevoir la manipulation rotative de l'utilisateur,
- un mécanisme de rotation (170) convertissant la rotation d'une section de ladite surface externe du bouton (160) en rotation de ladite tige (2) de cartouche mélangeur, et
- un mécanisme d'inclinaison (180) étant un mécanisme différent du mécanisme de rotation (170), ledit mécanisme d'inclinaison (180) convertissant la rotation de ladite section de ladite surface externe du bouton (160) en inclinaison de ladite tige (2) de cartouche mélangeur, **caractérisée en ce que** la poignée de robinet mélangeur (100) comprend en outre un changeur (150) pour passer entre une première vitesse et une deuxième vitesse de la poignée de robinet mélangeur (100), où :
- lorsque la poignée de robinet mélangeur (100) est dans ladite première vitesse, le mécanisme de rotation est engagé avec le bouton (160) et le mécanisme d'inclinaison (180) est désengagé dudit bouton (160), et
- lorsque la poignée de robinet mélangeur (100) est dans ladite deuxième vitesse, le mécanisme d'inclinaison est engagé avec le bouton (160) et ledit mécanisme de rotation est désengagé dudit bouton (160),
- dans laquelle ledit changeur (150) passe entre ladite première et ladite deuxième vitesse en désengageant un mécanisme et en engageant un autre mécanisme.

2. Poignée de robinet mélangeur (100) selon la revendication 1, dans laquelle ladite section dudit bouton (160) est le bouton lui-même.

3. Poignée de robinet mélangeur (100) selon l'une quelconque des revendications 1 à 2, comprenant en outre un adaptateur de tige (110) pour engager de manière rigide la tige (2) de cartouche mélangeur de ladite cartouche (1), l'adaptateur de tige (110) est engagé avec au moins ledit mécanisme d'inclinaison (180).

4. Poignée de robinet mélangeur (100) selon l'une quelconque des revendications 1 à 3, dans laquelle ledit mécanisme d'inclinaison (180) comprend un guidage (153) pour convertir la rotation dudit bouton (160) en une inclinaison de ladite tige (2) de cartouche mélangeur.

5. Poignée de robinet mélangeur (100) selon la revendication 4, dans laquelle ledit guidage (153) est un guidage en forme escargot.

6. Poignée de robinet mélangeur (100) selon l'une quelconque des revendications 1 à 5, dans laquelle le passage entre ladite première et ladite deuxième vitesse comprend un mouvement d'au moins une partie du bouton (160) le long de l'axe de hauteur d'une cartouche commandée par la poignée de robinet mélangeur (100).

7. Poignée de robinet mélangeur (100) selon l'une quelconque des revendications 1 à 6, dans laquelle ledit changeur comprend un moyen de ressort périphérique pour alterner un encliquetage dans une première rainure et dans une seconde rainure (161, 162) du bouton (160).

8. Poignée de robinet mélangeur (100) selon l'une quelconque des revendications 1 à 7, dans laquelle le verrouillage et le désengagement en rotation des pièces les unes par rapport aux autres lors du passage entre ladite première et ladite deuxième vitesse est effectué par engagement et désengagement des roues dentées périphériques (122, 132) et des roues dentées annulaires (141, 164).

9. Poignée de robinet mélangeur (100) selon l'une quelconque des revendications 1 à 8, comprenant en outre un écrou de blocage (120) pour fixer ladite poignée de robinet mélangeur (100) par rapport audit robinet (1), la poignée de robinet mélangeur (100) comprenant en outre une bague de transmission (130) étant bloquée en rotation par rapport à ladite tige (2) de cartouche mélangeur, où :
- lorsque ladite poignée de robinet (100) est dans ladite première vitesse, la bague de transmission (130) est bloquée en rotation par rapport audit bouton (160) et peut tourner par rapport audit écrou de blocage (120), et
- lorsque ladite poignée de robinet (100) est dans ladite deuxième vitesse, la bague de transmission (130) est bloquée en rotation par rapport audit écrou de blocage (120) et ladite tige (2) et peut tourner par rapport audit bouton (160).

10. Poignée de robinet mélangeur (100) selon les revendications 1 et 9, dans laquelle ladite bague de transmission (130) et ledit écrou de blocage (120) ont des roues dentées similaires (122, 132), et ladite bague de transmission (130) et ledit écrou de blocage (120) peuvent être verrouillés en rotation en engageant les deux roues dentées similaires (122, 132) avec une roue dentée de coordination (141).

11. Robinet mélangeur (3) avec une poignée de robinet mélangeur (100) selon l'une quelconque des revendications 1 à 10.

12. Robinet mélangeur à capteur (3) avec une poignée de robinet mélangeur (100) selon l'une quelconque des revendications 1 à 10.
